# EUROPEAN PATENT SPECIFICATION

(11) **EP 1 922 362 B1**
(45) Date of publication and mention of the grant of the patent: **18.01.2012**
(21) Application number: 06775118.0
(22) Date of filing: 16.08.2006
(51) Int. Cl.: C08L 23/32, C08L 23/36, C08F 236/08, C08F 210/12, C08K 5/14, C08L 15/00

(54) **PEROXIDE CURABLE RUBBER COMPOUND CONTAINING HIGH MULTIOLEFIN HALOBUTYL IONOMERS**
PEROXIDHÄRTBARE KAUTSCHUKMASSE, ENTHALTEND HALOBUTYLIONOMERE MIT HOHEM MULTIOLEFINGEHALT
COMPOSÉ DE CAOUTCHOUC VULCANISABLE PAR UN PEROXYDE CONTENANT DES IONOMÈRES D'HALOGÉNOBUTYL À TENEUR ÉLEVÉE EN MULTIOLÉFINE

(30) Priority: 26.08.2005 US 711573 P
(43) Date of publication of application: 21.05.2008
(73) Proprietor: Lanxess Inc., Sarnia, Ontario N7T 7M2 (CA)
(72) Inventor: RESENDES, Rui, Kingston, Ontario K7P 0B5 (CA); HICKEY, Janice Nicole, Sarnia, ON N7T 7N9 (CA)
(74) Representative: Deblon, Jörg-Stephan
(86) International application number: PCT/CA2006/001343
(87) International publication number: WO 2007/022619

(56) References cited:
- EP-A- 1 449 859
- WO-A-02/16452
- WO-A-02/31039
- CA-A1- 2 386 628
- CA-A1- 2 413 611
- CA-A1- 2 418 884
- CA-A1- 2 448 615
- CA-A1- 2 458 741
- CA-A1- 2 458 741
- US-A- 5 200 469
- US-A1- 2004 097 654
- PARENT J S ET AL: "Isobutylene-based ionomer composites: siliceous filler reinforcement" POLYMER, ELSEVIER SCIENCE PUBLISHERS B.V, GB, vol. 45, no. 24, 1 November 2004 (2004-11-01), pages 8091-8096, XP004619238 ISSN: 0032-3861
- PARENT J S ET AL: "SYNTHESIS AND CHARACTERIZATION OF ISOBUTYLENE-BASED AMMONIUM AND PHOSPHONIUM BROMIDE IONOMERS" MACROMOLECULES, ACS, WASHINGTON, DC, US, vol. 37, no. 20, 1 January 2004 (2004-01-01), pages 7477-7483, XP003009417 ISSN: 0024-9297
- PARENT J.S. ET AL. POLYMER vol. 45, 2004, pages 8091 - 8096, XP004619238
- PARENT J.S. ET AL. MACROMOLECULES vol. 37, 2004, pages 7477 - 7483, XP003009417

## Description

### FIELD OF THE INVENTION

The present invention relates to a peroxide curable rubber compound containing a peroxide curing agent and butyl ionomer prepared by reacting a halogenated butyl polymer having a high mol percent of multiolefin with at least one nitrogen and/or phosphorus based nucleophile.

### BACKGROUND OF THE INVENTION

Butyl rubber is understood to be a copolymer of an isoolefin and one or more, preferably conjugated, multiolefins as comonomers. Commercial butyl comprise a major portion of isoolefin and a minor amount, not more than 2.5 mol %, of a conjugated multiolefin. Butyl rubber or butyl polymer is generally prepared in a slurry process using methyl chloride as a vehicle and a Friedel-Crafts catalyst as part of the polymerization initiator. The methyl chloride offers the advantage that AlCl₃, a relatively inexpensive Friedel-Crafts catalyst, is soluble in it, as are the isobutylene and isoprene comonomers. Additionally, the butyl rubber polymer is insoluble in the methyl chloride and precipitates out of solution as fine particles. The polymerization is generally carried out at temperatures of about -90° C to -100° C. See U.S. Patent No. 2,356,128 and Ullmanns Encyclopedia of Industrial Chemistry, volume A 23, 1993, pages 288-295. The low polymerization temperatures are required in order to achieve molecular weights which are sufficiently high for rubber applications.

Peroxide curable butyl rubber compounds offer several advantages over conventional, sulfur-curing, systems. Typically, these compounds display extremely fast cure rates and the resulting cured articles tend to possess excellent heat resistance. In addition, peroxide-curable formulations are considered to be "clean" in that they do not contain any extractable inorganic impurities (e.g., sulfur). The clean rubber articles can therefore be used, for example, in condenser caps, biomedical devices, pharmaceutical devices (stoppers in medicine-containing vials, plungers in syringes) and possibly in seals for fuel cells.

It is well accepted that polyisobutylene and butyl rubber decompose under the action of organic peroxides. Furthermore, U.S. Patent Nos. 3,862,265 and 4,749,505 disclose that copolymers of a C₄ to C₇ isomonoolefin with up to 10 wt. % isoprene or up to 20 wt. % para-alkylstyrene undergo a molecular weight decrease when subjected to high shear mixing. This effect is enhanced in the presence of free radical initiators.

One approach to obtaining a peroxide-curable butyl-based formulation lies in the use of conventional butyl rubber in conjunction with a vinyl aromatic compound like divinylbenzene (DVB) and an organic peroxide (see JP-A-107738/1994). In place of DVB, an electron-withdrawing group-containing polyfunctional monomer (ethylene dimethacrylate, trimethylolpropane triacrylate, N,N'-m-phenylene dimaleimide) can also be used (see JP-A-172547/1994).

A commercially available terpolymer based on isobutylene (IB), isoprene (IP) and DVB, XL-10000, is curable with peroxides alone. However, this material does possess some significant disadvantages. For example, the presence of significant levels of free DVB can present safety concerns. In addition, since the DVB is incorporated during the polymerization process a significant amount of crosslinking occurs during manufacturing. The resulting high Mooney (60-75 MU, ML1+8@125° C) and presence of gel particles make this material extremely difficult to process. For these reasons, it would be desirable to have an isobutylene based polymer which is peroxide curable, completely soluble (i.e., gel free) and contains no, or trace amounts of, divinylbenzene in its composition.

White et al. (U.S. Patent No. 5,578.682) claimed a process for obtaining a polymer with a bimodal molecular weight distribution derived from a polymer that originally possessed a monomodal molecular weight distribution. The polymer, e.g., polyisobutylene, a butyl rubber or a copolymer of isobutylene and para-methylstyrene, was mixed with a polyunsaturated crosslinking agent (and, optionally, a free radical initiator) and subjected to high shearing mixing conditions in the presence of organic peroxide. This bimodalization was a consequence of the coupling of some of the free-radical degraded polymer chains at the unsaturation present in the crosslinking coagent. It is important to note that this patent was silent about any filled compounds of such modified polymers or the cure state of such compounds.

Sudo et. al. (U.S. Patent No. 5,994,465) claimed a method for curing regular butyl, with isoprene contents ranging from 0.5 to 2.5 mol %, by treatment with a peroxide and a bismaleimide species. Co-pending application CA-2,418,884 discloses a continuos process for producing polymers having a Mooney viscosity of at least 25 Mooney-units and a gel content of less than 15 wt. % comprising repeating units derived from at least one isoolefin monomer, more than 4.1 mol % of repeating units derived from at least one multiolefin monomer and optionally further copolymerizable monomers in the presence of AlCl₃ and a proton source and/or cationogen capable of initiating the polymerization process and at least one multiolefin cross-linking agent wherein the process is conducted in the absence of transition metal compounds. Specifically, CA 2,418,884 describes the continuous preparation of butyl rubber with isoprene levels ranging from 3 to 8 mol %.

### SUMMARY OF THE INVENTION

With elevated levels of isoprene now available, it is surprisingly possible, to generate halogenated butyl rubber analogues which contain allylic halide functionalities ranging from 3 to 8 mol %. By utilizing the reactive allylic halide functionalities present, it is possible to prepare butyl based ionomeric species and ultimately optimize the levels of residual multiolefin thereby facilitating the peroxide cure of formulations based on this material.

The present invention relates to a peroxide curable rubber compound containing butyl ionomers prepared by reacting a halogenated butyl polymer having a high mol percent of multiolefin with at least one nitrogen and/or phosphorus based nucleophile.

### DETAILED DESCRIPTION OF THE INVENTION

### Preparation of high multiolefin butyl Polymers

The high multiolefin butyl polymer useful in the preparation of the butyl ionomer for the peroxide curable compound according to the present invention is derived from at least one isoolefin monomer, at least one multiolefin monomer and optionally further copolymerizable monomers.

The present invention is not limited to a special isoolefin. However, isoolefins within the range of from 4 to 16 carbon atoms, preferably 4-7 carbon atoms, such as isobutene, 2-methyl-1-butene, 3-methyl-1-butene, 2-methyl-2-butene, 4-methyl-1-pentene and mixtures thereof are preferred. More preferred is isobutene.

The present invention is not limited to a special multiolefin. Every multiolefin copolymerizable with the isoolefin known by the skilled in the art can be used. However, multiolefins with in the range of from 4-14 carbon atoms, such as isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof, preferably conjugated dienes, are used. Isoprene is more preferably used.

In the present invention, β-pinene can also be used as a co-monomer for the isoolefin.

As optional monomers, any monomer copolymerizable with the isoolefins and/or dienes known by the skilled in the art can be used. α-methyl styrene, p-methyl styrene, chlorostyrene, cyclopentadiene and methylcyclopentadiene are preferably used. Indene and other styrene derivatives may also be used in the present invention.

Preferably, the monomer mixture to prepare the high multiolefin butyl polymer contains in the range of from 80% to 95% by weight of at least one isoolefin monomer and in the range of from 4.0% to 20% by weight of at least one multiolefin monomer and/or β-pinene and in the range of from 0.01% to 1% by weight of at least one multiolefin cross-linking agent. More preferably, the monomer mixture contains in the range of from 83% to 94% by weight of at least one isoolefin monomer and in the range of from 5.0% to 17% by weight of a multiolefin monomer or β-pinene and in the range of from 0.01 % to 1% by weight of at least one multiolefin cross-linking agent. Most preferably, the monomer mixture contains in the range of from 85% to 93% by weight of at least one isoolefin monomer and in the range of from 6.0% to 15% by weight of at least one multiolefin monomer, including β-pinene and in the range of from 0.01% to 1% by weight of at least one multiolefin cross-linking agent.

The weight average molecular weight of the high multiolefin butyl polymer (Mw), is preferably greater than 240 kg/mol, more preferably greater than 300 kg/mol, even more preferably greater than 500 kg/mol, most preferably greater than 600 kg/mol.

The gel content of the high multiolefin butyl polymer is preferably less than 10 wt.%, more preferably less than 5 wt.%, even more preferably less than 3 wt.%, most preferably less than 1 wt.%. In connection with the present invention the term "gel" is understood to denote a fraction of the polymer insoluble for 60 min in cyclohexane boiling under reflux.

The polymerization of the high multiolefin butyl polymer is performed in the presence of AlCl₃ and a proton source and/or cationogen capable of initiating the polymerization process. A proton source suitable in the present invention includes any compound that will produce a proton when added to AlCl₃ or a composition containing AlCl₃. Protons may be generated from the reaction of AlCl₃ with proton sources such as water, alcohol or phenol to produce the proton and the corresponding by-product. Such reaction may be preferred in the event that the reaction of the proton source is faster with the protonated additive as compared with its reaction with the monomers. Other proton generating reactants include thiols, carboxylic acids, and the like. According to the present invention, when low molecular weight high multiolefin butyl polymer is desired an aliphatic or aromatic alcohol is preferred. The most preferred proton source is water. The preferred ratio of AlCl₃ to water is between 5:1 to 100:1 by weight. It may be advantageous to further introduce AlCl₃ derivable catalyst systems, diethylaluminium chloride, ethylaluminium chloride, titanium tetrachloride, stannous tetrachloride, boron trifluoride, boron trichloride, or methylalumoxane.

In addition or instead of a proton source a cationogen capable of initiating the polymerization process can be used. Suitable cationogen includes any compound that generates a carbo-cation under the conditions present. A preferred group of cationogens include carbocationic compounds having the formula: 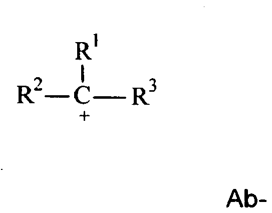 wherein R¹, R² and R³, are independently hydrogen, or a linear, branched or cyclic aromatic or aliphatic group, the proviso that only one of R¹, R² and R³ may be hydrogen. Preferably, R¹, R² and R³, are independently a C₁ to C₂₀ aromatic or aliphatic group. Non-limiting examples of suitable aromatic groups may be selected from phenyl, tolyl, xylyl and biphenyl. Non-limiting examples of suitable aliphatic groups include methyl, ethyl, propyl, butyl, pentyl, hexyl, octyl, nonyl, decyl, dodecyl, 3-methylpentyl and 3,5,5-trimethylhexyl.

Another preferred group of cationogens includes substituted silylium cationic compounds having the formula: 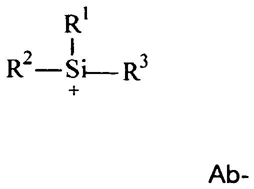 wherein R¹, R² and R³, are independently hydrogen, or a linear, branched or cyclic aromatic or aliphatic group, with the proviso that only one of R¹, R² and R³ may be hydrogen. Preferably, none of R¹, R² and R³ is H. Preferably, R¹, R² and R³ are, independently, a C₁ to C₂₀ aromatic or aliphatic group. More preferably, R¹, R² and R³ are independently a C₁ to C₈ alkyl group. Examples of useful aromatic groups may be selected from phenyl, tolyl, xylyl and biphenyl. Non-limiting examples of useful aliphatic groups include methyl, ethyl, propyl, butyl, pentyl, hexyl, octyl, nonyl, decyl, dodecyl, 3-methylpentyl and 3,5,5-trimethylhexyl. A preferred group of reactive substituted silylium cations include trimethylsilylium, triethyl-silylium and benzyldimethylsilylium. Such cations may be prepared, for example, by the exchange of the hydride group of the R¹R²R³Si-H with a non-coordinating anion (NCA), such as Ph3C+B(pfp)₄- yielding compositions such as R¹R²R³SiB(pfp)₄ which in the appropriate solvent obtain the cation.

According to the present invention, Ab- denotes an anion. Preferred anions include those containing a single coordination complex possessing a charge bearing metal or metalloid core which is negatively charged to the extent necessary to balance the charge on the active catalyst species which may be formed when the two components are combined. More preferably Ab- corresponds to a compound with the general formula [MQ4]- wherein
M is a boron, aluminum, gallium or indium in the +3 formal oxidation state; and
Q is independently selected from hydride, dialkylamido, halide, hydrocarbyl, hydrocarbyloxide, halo-substituted hydrocarbyl, halo-substituted hydrocarbyloxide, and halo-substituted silylhydrocarbyl radicals.

Preferably, there are no organic nitro compounds or transition mentals used in the process according to the present invention.

The reaction mixture used to produce the high multiolefin containing butyl polymer further contains a multiolefin cross-linking agent. The term cross-linking agent is known to those skilled in the art and is understood to denote a compound that causes chemical cross-linking between the polymer chains in opposition to a monomer that will add to the chain. Some easy preliminary tests will reveal if a compound will act as a monomer or a cross-linking agent. The choice of the cross-linking agent is not restricted. Preferably, the cross-linking contains a multiolefinic hydrocarbon compound. Examples of these include norbornadiene, 2-isopropenylnorbornene, 2-vinyl-norbornene, 1,3,5-hexatriene, 2-phenyl-1,3-butadiene, divinylbenzene, diisopropenylbenzene, divinyltoluene, divinylxylene and C₁ to C₂₀ alkyl-substituted derivatives thereof. More preferably, the multiolefin crosslinking agent is divinylbenzene, diiso-propenylbenzene, divinyltoluene, divinyl-xylene and C₁ to C₂₀ alkyl substituted derivatives thereof, and or mixtures of the compounds given. Most preferably the multiolefin crosslinking agent contains divinylbenzene and diisopropenylbenzene.

The polymerization of the high multiolefin containing butyl polymer can be performed in a continuous process in slurry (suspension), in a suitable diluent, such as chloroalkanes as described in U.S. Patent No. 5,417,930.

The monomers are generally polymerized cationically, preferably at temperatures in the range from -120° C to + 20° C, preferably in the range from -100° C to -20° C, and pressures in the range from 0.1 to 4 bar.

The use of a continuous reactor as opposed to a batch reactor seems to have a positive effect on the process. Preferably, the process is conducted in at least one continuous reactor having a volume of between 0.1 m³ and 100 m³, more preferable between 1 m³ and 10 m³.

Inert solvents or diluents known to the person skilled in the art for butyl polymerization may be considered as the solvents or diluents (reaction medium). These include alkanes, chloroalkanes, cycloalkanes or aromatics, which are frequently also mono- or polysubstituted with halogens. Hexane/chloroalkane mixtures, methyl chloride, dichloromethane or the mixtures thereof may be preferred. Chloroalkanes are preferably used in the process according to the present invention.

Polymerization is preferably performed continuously. The process is preferably performed with the following three feed streams:
I) solvent/diluent + isoolefin (preferably isobutene) + multiolefin (preferably diene, isoprene)
II) initiator system
III) multiolefin cross-linking agent

It should be noted that the multiolefin crosslinking agent can also be added in the same feed stream as the isoolefin and multiolefin.

### Preparation of the high multiolefin halobutyl Polymer

The resulting high multiolefin butyl polymer can then be subjected to a halogenation process in order to produce high multiolefin halobutyl polymers. Bromination or chlorination can be performed according to the process known by those skilled in the art, such as, the procedures described in Rubber Technology, 3rd Ed., Edited by Maurice Morton, Kluwer Academic Publishers, pp. 297 - 300 and references cited within this reference.

The resulting high multiolefin halobutyl polymer should have a total allylic halide content from 0.05 to 2.0 mol %, more preferably from 0.2 to 1.0
mol % and even more preferably from 0.5 to 0.8 mol %. The high multiolefin halobutyl polymer should also contain residual multiolefin levels ranging from 2 to 10 mol %, more preferably from 3 to 8 mol % and even more preferably from 4 to 7.5 mol %.

### Preparation of the high multiolefin butyl ionomer

According to the process of the present invention, the high multiolefin halobutyl polymer can then be reacted with at least one nitrogen and/or phosphorus containing nucleophile according to the following formula: 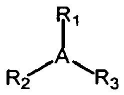 wherein A is a nitrogen or phosphorus,

R₁, R₂ and R₃ is selected from the group consisting of linear or branched C₁-C₁₈ alkyl substituents, an aryl substituent which is monocyclic or composed of fused C₄-C₈ rings, and/or a hetero atom selected from, for example, B, N, O, Si, P, and S.

In general, the appropriate nucleophile will contain at least one neutral nitrogen or phosphorus center which possesses a lone pair of electrons which is both electronically and sterically accessible for participation in nucleophilic substitution reactions. Suitable nucleophiles include trimethylamine, triethylamine, triisopropylamine, tri-n-butylamine, trimethylphosphine, triethylphosphine, triisopropylphosphine, tri-n-butylphosphine, and triphenylphosphine.

According to the present invention, the amount of nucleophile reacted with the high multiolefin butyl rubber is in the range from 1 to 5 molar equivalents, more preferable 1.5 to 4 molar equivalents and even more preferably 2 to 3 molar equivalents based on the total molar amount of allylic halide present in the high multiolefin halobutyl polymer.

The high multiolefin halobutyl polymer and the nucleophile can be reacted for about 10 to 90 minutes, preferably from 15 to 60 minutes and more preferably from 20 to 30 minutes at temperatures ranging from 80 to 200° C, preferably from 90 to 160° C and more preferably from 100 to 140° C.

The resulting high multiolefin halobutyl based ionomer preferably possesses from 0.05 to 2.0 mol %, more preferably from 0.2 to 1.0 mol % and even more preferably from 0.5 to 0.8 mol % of the ionomeric moiety and from 2 to 10 mol %, more preferably from 3 to 8 mol % and even more preferably from 4 to 7.5 mol % of multiolefin.

According to the present invention the resulting ionomer could also be a mixture of the polymer-bound ionomeric moiety and allylic halide such that the total molar amount of ionomeric moiety and allylic halide functionality are present in the range of 0.05 to 2.0 mol %, more preferably from 0.2 to 1.0 mol % and even more preferably from 0.5 to 0.8 mol % with residual multiolefin being present in the range from 0.2 to 1.0 mol % and even more preferably from 0.5 to 0.8 mol %.

### Preparation of Peroxide Curable Rubber Compound

The rubber compounds of the invention are ideally suitable for the production of moldings of all kinds, such as tire components and industrial rubber articles, such as bungs, damping elements, profiles, films, coatings. The high multiolefin halobutyl ionomers can be used alone or as a mixture with other rubbers, such as NR, BR, HNBR, NBR, SBR, EPDM or fluororubbers to form these cured articles. The preparation of these compounds is known to those skilled in the art. In most cases carbon black is added as filler and a peroxide based curing system is used. The compounding and vulcanization carried out by a process known to those skilled in the art, such as the process disclosed in Encyclopedia of Polymer Science and Engineering, Vol. 4, S. 66 et seq. (Compounding) and Vol. 17, S. 666 et seq. (Vulcanization).

The present invention is not limited to a special peroxide curing system. For example, inorganic or organic peroxides are suitable. Preferred are organic peroxides such as dialkylperoxides, ketalperoxides, aralkyl peroxides, peroxide ethers, peroxide esters, such as di-tert.-butylperoxide, bis-(tert.-butylperoxyisopropyl)-benzol, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the compound is in the range of from 1 to 10 phr (= per hundred rubber), preferably from 1 to 5 phr. Subsequent curing is usually performed at a temperature in the range of from 100 to 200° C, preferably 130 to 180° C. Peroxides might be applied advantageously in a polymer-bound form. Suitable systems are commercially available, such as Polydispersion T(VC) D-40 P from Rhein Chemie Rheinau GmbH, D (= poly-merbound di-tert.-butylperoxy-isopropylbenzene).

Even if it is not preferred, the compound may further contain other natural or synthetic rubbers such as BR (polybutadiene), ABR (butadiene/acrylic acid-C1-C4-alkylester-copolymers), CR (polychloroprene), IR (polyiso-prene), SBR (styrene/butadiene-copolymers) with styrene contents in the range of 1 to 60 wt%, NBR (butadiene/acrylonitrile-copolymers with acrylonitrile contents of 5 to 60 wt%, HNBR (partially or totally hydro-genated NBR-rubber), EPDM (ethylene/propylene/diene-copolymers), FKM (fluoropolymers or fluororubbers), and mixtures of the given polymers.

The peroxide curable rubber compound according to the present invention can also contain fillers. Fillers according to the present invention are composed of particles of a mineral, suitable fillers include silica, silicates, clay (such as bentonite), gypsum, alumina, titanium dioxide, talc and the like, as well as mixtures thereof.

Further examples of suitable fillers include:
- highly disperse silicas, prepared e.g. by the precipitation of silicate solutions or the flame hydrolysis of silicon halides, with specific surface areas of 5 to 1000, preferably 20 to 400 m²/g (BET specific surface area), and with primary particle sizes of 10 to 400 nm; the silicas can optionally also be present as mixed oxides with other metal oxides such as Al, Mg, Ca, Ba, Zn, Zr and Ti;
- synthetic silicates, such as aluminum silicate and alkaline earth metal silicate;
- magnesium silicate or calcium silicate, with BET specific surface areas of 20 to 400 m²/g and primary particle diameters of 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide
or combinations thereof.

Because these mineral particles have hydroxyl groups on their surface, rendering them hydrophilic and oleophobic, it is difficult to achieve good interaction between the filler particles and the butyl elastomer. If desired, the interaction between the filler particles and the polymer can be enhanced by the introduction of silica modifiers. Non-limiting examples of such modifiers include bis-[-(triethoxysilyl)-propyl]-tetrasulfide, bis-[-(triethoxysilyl)-proply]-disulfide, N,N,-dimethylethanolamine, ethanolamine, triethoxysilyl-propyl-thiol and triethoxyvinylsilane.

For many purposes, the preferred mineral is silica, especially silica prepared by the carbon dioxide precipitation of sodium silicate.

Dried amorphous silica particles suitable for use as mineral fillers in accordance with the present invention have a mean agglomerate particle size in the range of from 1 to 100 microns, preferably between 10 and 50 microns and more preferably between 10 and 25 microns. It is preferred that less than 10 percent by volume of the agglomerate particles are below 5 microns or over 50 microns in size. A suitable amorphous dried silica has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are commercially available under the trademarks HiSil 210, HiSil 233 and HiSil 243 available from PPG Industries Inc. Also suitable are Vulkasil S and Vulkasil N, commercially available from Bayer AG.

Mineral fillers can also be used in combination with known non-mineral fillers, such as
- carbon blacks; suitable carbon blacks are preferably prepared by the lamp black, furnace black or gas black process and have BET specific surface areas of 20 to 200 m²/g, for example, SAF, ISAF, HAF, FEF or GPF carbon blacks;
   or
- rubber gels, preferably those based on polybutadiene, butadiene/styrene copolymers, butadiene/acrylonitrile copolymers and polychloroprene.

Non-mineral fillers are not normally used as filler in the halobutyl elastomer compositions of the present invention, but in some embodiments they may be present in an amount up to 40 phr. It is preferred that the mineral filler should constitute at least 55% by weight of the total amount of filler. If the halobutyl elastomer composition of the present invention is blended with another elastomeric composition, that other composition may contain mineral and/or non-mineral fillers.

The rubber compound according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are from 0.1 to 50 wt.%, based on rubber.

Preferably the compound furthermore includes in the range of 0.1 to 20 phr of an organic fatty acid, preferably a unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8 - 22 carbon atoms, more preferably 12-18. Examples include stearic acid, palmic acid and oleic acid and their calcium-, zinc-, magnesium-, potassium- and ammonium salts.

The ingredients of the final compound are mixed together, suitably at an elevated temperature that may range from 25° C to 200° C. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage.

The inventive compounds are very well suited for the manufacture of shaped articles, especially shaped articles for high-purity applications such as fuel cell components (e.g. condenser caps), medical devices.

The invention is further illustrated but is not intended to be limited by the following examples in which all parts and percentages are by weight unless otherwise specified.

The following Examples are provided to illustrate the present invention:

### EXAMPLES

Equipment: Hardness and Stress Strain Properties were determined with the use of an A-2 type durometer following ASTM D-2240 requirements. The stress strain data was generated at 23° C according to the requirements of ASTM D-412 Method A. Die C dumbbells cut from 2mm thick tensile sheets (cured for tc90+5 minutes at 160° C) were used. The tc90 times were determined according to ASTM D-5289 with the use of a Moving Die Rheometer (MDR 2000E) using a frequency of oscillation of 1.7 Hz and a 1° arc at 170° C for 30 minutes total run time. Curing was achieved with the use of an Electric Press equipped with an Allan-Bradley Programmable Controller. 1 H NMR spectra were recorded with a Bruker DRX500 spectrometer (500.13 MHz 1 H) in CDCl3 with chemical shifts referenced to tetramethylsilane.

Materials: All reagents, unless otherwise specified, were used as received from Sigma-Aldrich (Oakville, Ontario). BIIR (BB2030) and calcium stearate was used as supplied by LANXESS Inc. Epoxidized soya-bean oil (L. V. Lomas), Irganox 1076 (CIBA Canada Ltd.), Carbon Black IRB #7 (Balentine Enterprises Ltd.), HVA #2 (Dupont Canada) and DiCup 40C (Struktol Canada) were used as received from their respective suppliers.

### Example 1: Preparation of High Isoprene BIIR

110 mL of elemental bromine was added to a solution of 7 kg of 6.5 mol % of 1,4 high isoprene butyl polymer prepared according to Example 2 of CA 2,418,884 in 31.8 kg of hexanes and 2.31 kg of water in a 95 L reactor with rapid agitation. After 5 minutes, the reaction was terminated via the addition of a caustic solution of 76 g of NaOH in 1 L of water. Following an additional 10 minutes of agitation, a stabilizer solution of 21.0 g of epoxidized soya-bean oil and 0.25 g of Irganox® 1076 in 500 mL of hexanes and one of 47.0 g of epoxidized soya-bean oil and 105 g of calcium stearate in 500 mL of hexanes was added to the reaction mixture. After an additional 1 h of agitation, the high multiolefin butyl polymer was isolated by steam coagulation. The final material was dried to a constant weight with the use of a two roll 10" x 20" mill operating at 100° C. The microstructure of the resulting material is presented in Table 1.

### Example 2: Preparation of High Isoprene IIR lonomer

48 g of Example 1 and 4.7 g (3 molar equivalents based on allylic bromide content of Example 1) of triphenylphosphine were added to a Brabender internal mixer (Capacity 75 g) operating at 100° C and a rotor speed of 60 RPM. Mixing was carried out for a total of 60 minutes. Analysis of the final product by ¹HNMR confirmed the complete conversion of all the allylic bromide sites of Example 1 to the corresponding ionomeric species. The resulting material was also found to possess ca. 4.2 mol % of 1,4-isoprene.

### Example 3: Preparation of High IP IIR Cured Article (Comparative)

40 g of high IP IIR which possessed a 1,4-IP content of 4.2 mol % (prepared according to Example 1 of CA 2,418,884 was introduced into a Brabender miniature internal mixer (Capacity = 75 g) operating at 30° C with a rotor speed of 60 RPM After 1 minute of mixing, 20 g of IRB #7 was introduced into the mixture. Following an additional 2 minutes of mixing, 0.8 g of HVA #2 was added into the mixture. After 1 minute, 1.6 g of DiCup 40C was added into the internal mixer. The resulting mixture was allowed to blend for an additional 2 minutes. The resulting formulation was cured and the tensile properties were determined as described above. These results are tabulated in Table 2.

### Example 4: Preparation of High IP IIR Ionomer Cured Article (Invention)

40 g of Example 2 was introduced into a Brabender miniature internal mixer (Capacity = 75 g) operating at 30° C with a rotor speed of 60 RPM. After 1 minute of mixing, 20 g of IRB #7 was introduced into the mixture. Following an additional 2 minutes of mixing, 0.8 g of HVA #2 was added into the mixture. After 1 minute, 1.6 g of DiCup 40C was added into the internal mixer. The resulting mixture was allowed to blend for an additional 2 minutes. The resulting formulation was cured and the tensile properties were determined as described above. These results are tabulated in Table 2.

**Table 1:Microstructure of High Isoprene Butyl lonomer**

| | |
|---|---|
| Total Unsats (mol %) | 5.79 |
| 1,4 Isoprene (mol %) | 4.19 |
| Branched Isoprene (mol %) | 0.32 |
| Allylic Bromide (mol %) | 0.71 |
| Conjugated Diene (mol %) | 0.04 |
| Endo Br (mol %) | 0.07 |

**Table 2:Tensile Properties**

| | Example 3 (comparative) | Example 4 |
|---|---|---|
| Hardness Shore A2 (pts.) | 50 | 66 |
| Ultimate Tensile (MPa) | 8.1 | 7.8 |
| Ultimate Elonqation (%) | 442 | 427 |
| Stress @ 25 % (MPa) | 0.618 | 1.54 |
| Stress @ 50 % (MPa) | 0.780 | 2.01 |
| Stress @ 100 % (MPa) | 1.15 | 2.81 |
| Stress @ 200 % (MPa) | 2.82 | 4.54 |
| Stress @ 300 % (MPa) | 5.43 | 6.30 |

As can be seen from the examples described above, the treatment of a high isoprene analogue of BIIR (Example 1) with a neutral phosphorus based nucleophile results in the formation of the corresponding high IP IIR ionomer (Example 2).

The presence of ionomeric units along the IIR polymer backbone allowed for the attainment of superior physical properties in peroxide cured vulcanizates. As can be seen from the data presented in Table 2, the tensile properties determined for compounds (Example 4) based on the high IP IIR ionomer described in Example 2 were superior to those measured for formulations based on butyl rubber with 4.2 mol % of IP (Example 3). This observation suggests that the presence of an ionomeric network contributes favorably to the physical properties of peroxide cured vulcanizates.

## Claims

1. A peroxide curable rubber compound comprising a peroxide curative and a high multiolefin halobutyl ionomer prepared by (a) polymerizing a monomer mixture comprising at least one isoolefin monomer, at least one multiolefin monomer and optionally further copolymerizable monomers in the presence of AlCl₃ and a proton source and/or cationogen capable of initiating the polymerization process and at least one multiolefin cross-linking agent to prepare a high multiolefin butyl polymer, then (b) halogenating the high multiolefin butyl polymer and (c) reacting the high multiolefin halobutyl polymer with at least one nitrogen and/or phosphorous based nucleophile.

2. The peroxide curable rubber compound according to Claim 1, wherein the nucleophile is of the general formula: 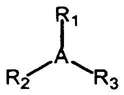 wherein A is a nitrogen or phosphorus, R₁, R₂ and R₃ are selected from the group consisting of linear or branched C₁-C₁₈ alkyl substituents, an aryl substituent which is monocyclic or composed of fused C₄-C₈ rings, and/or a hetero atom selected from, for example, B, N, O, Si, P, and S.

3. The peroxide curable rubber compound according to Claim 1, wherein the monomer mixture comprises 80% to 95% by weight of at least one isoolefin monomer and in the range of from 4.0% to 20% by weight of at least one multiolefin monomer and/or β-pinene and in the range of from 0.01% to 1% by weight of at least one multiolefin cross-linking agent.

4. The peroxide curable rubber compound according to Claim 3, wherein the monomer mixture comprises in the range of from 83% to 94% by weight of at least one isoolefin monomer and in the range of from 5.0% to 17% by weight of a multiolefin monomer or β-pinene and in the range of from 0.01% to 1% by weight of at least one multiolefin cross-linking agent.

5. The peroxide curable rubber compound according to Claim 3, wherein the monomer mixture comprises in the range of from 85% to 93% by weight of at least one isoolefin monomer and in the range of from 6.0% to 15% by weight of at least one multiolefin monomer, including β-pinene and in the range of from 0.01% to 1% by weight of at least one multiolefin cross-linking agent.

6. The peroxide curable rubber compound according to Claim 1, wherein the isoolefin is selected from the group consisting of isobutene, 2-methyl-1-butene, 3-methyl-1-butene, 2-methyl-2-butene, 4-methyl-1-pentene and mixtures thereof.

7. The peroxide curable rubber compound according to Claim 1, wherein the multiolefin is selected from the group consisting of isoprene, butadiene, 2-methylbutadiene, 2,4-dimethylbutadiene, piperyline, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof.

8. The peroxide curable rubber compound according to Claim 1, wherein the crosslinking agent is selected from the group consisting of norbornadiene, 2-isopropenylnorbornene, 2-vinyl-norbornene, 1,3,5-hexatriene, 2-phenyl-1,3-butadiene, divinylbenzene, diisopropenyl-benzene, divinyltoluene, divinylxylene and C₁ to C₂₀ alkyl-substituted derivatives thereof.

9. The peroxide curable rubber compound according to Claim 1, wherein the high multiolefin butyl polymer is halogenated with bromine or chloride.

10. The peroxide curable rubber compound according to Claim 1, wherein the nucleophile is selected from the group consisting of trimethylamine, triethylamine, triisopropylamine, tri-n-butylamine, trimethylphosphine, triethylphosphine, triisopropylphosphine, tri-n-butylphosphine, triphenylphosphine and mixtures thereof.

11. The peroxide curable rubber compound according to Claim 1, wherein the high multiolefin butyl ionomer comprises from about 2 to 10 mol% multiolefin.

12. The peroxide curable rubber compound according to Claim 1, wherein the high multiolefin butyl ionomer comprises from about 4 to 7.5 mol% multiolefin.

13. A peroxide curable rubber compound according to Claim 1, wherein the peroxide is selected from the group consisting of dialkylperoxides, ketalperoxides, aralkylperoxides, peroxide ethers and peroxide esters.

14. A peroxide curable rubber compound according to Claim 13, wherein the peroxide ester is selected from the group consisting of di-tert.-butylperoxide, bis-(tert.-butylperoxyisopropyl)-benzol, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate.

15. A peroxide curable rubber compound according to Claim 1, further comprising at least one filler.

16. A shaped article comprising a compound according to Claim 1.

17. An article according to Claim 15 in the form of a medical device or a condenser cap.

## Patentansprüche

1. Peroxidhärtbare Kautschukmasse, umfassend einen Peroxidhärter und ein Halobutylionomer mit hohem Multiolefingehalt, hergestellt durch (a) Polymerisieren einer Monomerenmischung, die mindestens ein Isoolefin-Monomer, mindestens ein Multiolefin-Monomer und gegebenenfalls weitere copolymerisierbare Monomere umfasst, in Gegenwart von AlCl₃ und einer Protonenquelle und/oder einem Kationogen, das zur Initiierung des Polymerisationsprozesses befähigt ist, und mindestens eines Multiolefin-Vernetzers zur Herstellung eines Butylpolymers mit hohem Multiolefingehalt, nachfolgendes (b) Halogenieren des Butylpolymers mit hohem Multiolefingehalt und (c) Umsetzen des Halobutylpolymers mit hohem Multiolefingehalt mit mindestens einem auf Stickstoff und/oder Phosphor basierenden Nucleophil.

2. Peroxidhärtbare Kautschukmasse nach Anspruch 1, wobei das Nucleophil die allgemeine Formel: 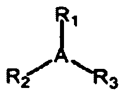 aufweist, worin A für Stickstoff oder Phosphor steht und R₁, R₂ und R₃ aus der Gruppe bestehend aus linearen und verzweigten C₁-C₁₈-Alkylsubstituenten, einem Arylsubstituenten, der monocyclisch ist oder aus anellierten C₄-C₈-Ringen besteht, und/oder einem Heteroatom, das beispielsweise unter B, N, O, Si, P und S ausgewählt ist, ausgewählt sind.

3. Peroxidhärtbare Kautschukmasse nach Anspruch 1, wobei die Monomerenmischung 80 bis 95 Gew.-% mindestens eines Isoolefin-Monomers und im Bereich von 4,0 bis 20 Gew.-% mindestens eines Multiolefin-Monomers und/oder β-Pinen und im Bereich von 0,01 bis 1 Gew.-% mindestens eines Multiolefin-Vernetzers umfasst.

4. Peroxidhärtbare Kautschukmasse nach Anspruch 3, wobei die Monomerenmischung im Bereich von 83 bis 94 Gew.-% mindestens eines Isoolefin-Monomers und im Bereich von 5,0 bis 17 Gew.-% eines Multiolefin-Monomers oder β-Pinen und im Bereich von 0,01 bis 1 Gew.-% mindestens eines Multiolefin-Vernetzers umfasst.

5. Peroxidhärtbare Kautschukmasse nach Anspruch 3, wobei die Monomerenmischung im Bereich von 85 bis 93 Ges.-% mindestens eines Isoolefin-Monomers und im Bereich von 6,0 bis 15 Gew.-% mindestens eines Multiolefin-Monomers, einschließlich β-Pinen, und im Bereich von 0,01 bis 1 Gew.-% mindestens eines Multiolefin-Vernetzers umfasst.

6. Peroxidhärtbare Kautschukmasse nach Anspruch 1, wobei das Isoolefin aus der Gruppe bestehend aus Isobuten, 2-Methyl-1-buten, 3-Methyl-1-buten, 2-Methyl-2-buten, 4-Methyl-1-penten und Mischungen davon ausgewählt ist.

7. Peroxidhärtbare Kautschukmasse nach Anspruch 1, wobei das Multiolefin aus der Gruppe bestehend aus Isopren, Butadien, 2-Methylbutadien, 2,4-Dimethylbutadien, Piperylen, 3-Methyl-1,3-pentadien, 2,4-Hexadien, 2-Neopentylbutadien, 2-Methyl-1,5-hexadien, 2,5-Dimethyl-2,4-hexadien, 2-Methyl-1,4-pentadien, 2-Methyl-1,6-heptadien, Cyclopentadien, Methylcyclopentadien, Cyclohexadien, 1-Vinylcyclohexadien und Mischungen davon ausgewählt ist.

8. Peroxidhärtbare Kautschukmasse nach Anspruch 1, wobei der Vernetzer aus der Gruppe bestehend aus Norbornadien, 2-Isopropenylnorbornen, 2-Vinylnorbornen, 1,3,5-Hexatrien, 2-Phenyl-1,3-butadien, Divinylbenzol, Diisopropenylbenzol, Divinyltoluol, Divinylxylol und C₁- bis C₂₀-alkylsubstituierten Derivaten davon ausgewählt ist.

9. Peroxidhärtbare Kautschukmasse nach Anspruch 1, wobei das Butylpolymer mit hohem Multiolefingehalt mit Brom oder Chlor halogeniert wird.

10. Peroxidhärtbare Kautschukmasse nach Anspruch 1, wobei das Nucleophil aus der Gruppe bestehend aus Trimethylamin, Triethylamin, Triisopropylamin, Tri-n-butylamin, Trimethylphosphin, Triethylphosphin, Triisopropylphosphin, Tri-n-butylphosphin, Triphenylphosphin und Mischungen davon ausgewählt ist.

11. Peroxidhärtbare Kautschukmasse nach Anspruch 1, wobei das Butylionomer mit hohem Multiolefingehalt etwa 2 bis 10 Mol-% Multiolefin umfasst.

12. Peroxidhärtbare Kautschukmasse nach Anspruch 1, wobei das Butylionomer mit hohem Multiolefingehalt etwa 4 bis 7,5 Mol-% Multiolefin umfasst.

13. Peroxidhärtbare Kautschukmasse nach Anspruch 1, wobei das Peroxid aus der Gruppe bestehend aus Dialkylperoxiden, Ketalperoxiden, Aralkylperoxiden, Peroxidethern und Peroxidestern ausgewählt ist.

14. Peroxidhärtbare Kautschukmasse nach Anspruch 13, wobei der Peroxidester aus der Gruppe bestehend aus Di-tert.-butylperoxid, Bis(tert.-butylperoxy-isopropyl)benzol, Dicumylperoxid, 2,5-Dimethyl-2,5-(di-tert.-butylperoxy)hexan, 2,5-Dimethyl-2,5-(di-tert.-butylperoxy)hexen-(3), 1,1-Bis(tert.-butylperoxy)-3,3,5-trimethylcyclohexan, Benzoylperoxid, tert.-Butylcumylperoxid und tert.-Butylperbenzoat ausgewählt ist.

15. Peroxidhärtbare Kautschukmasse nach Anspruch 1, die ferner mindestens einen Füllstoff umfasst.

16. Formkörper, umfassend eine Masse nach Anspruch 1.

17. Formkörper nach Anspruch 15 in Form einer medizinischen Vorrichtung oder eines Kondensatordeckels.

## Revendications

1. Composé de caoutchouc durcissable au peroxyde comprenant un agent de durcissement peroxyde et un ionomère d'halobutyle à teneur élevée en multioléfine préparé par (a) polymérisation d'un mélange de monomères comprenant au moins un monomère d'isooléfine, au moins un monomère de multioléfine et éventuellement d'autres monomères copolymérisables en présence d'AlCl₃ et d'une source de protons et/ou d'un cationogène capable d'initier le procédé de polymérisation et d'au moins un agent de réticulation multioléfine pour préparer un polymère de butyle à teneur élevée en multioléfine, puis (b) halogénation du polymère de butyle à teneur élevée en multioléfine et (c) mise en réaction du polymère d'halobutyle à teneur élevée en multioléfine avec au moins un nucléophile à base d'azote et/ou de phosphore.

2. Composé de caoutchouc durcissable au peroxyde selon la revendication 1, dans lequel le nucléophile est de formule général : 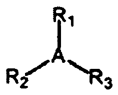 dans laquelle A est un azote ou un phosphore, R₁, R₂ et R₃ sont choisis dans le groupe constitué par les substituants alkyle en C₁-C₁₈ linéaires ou ramifiés, un substituant aryle qui est monocyclique ou composé de cycles en C₄-C₈ fusionnés et/ou un hétéroatome choisi par exemple parmi B, N, O, Si, P et S.

3. Composé de caoutchouc durcissable au peroxyde selon la revendication 1, dans lequel le mélange de monomères comprend 80 % à 95 % en poids d'au moins un monomère d'isooléfine et dans la plage allant de 4,0 % à 20 % en poids d'au moins un monomère de multioléfine et/ou de β-pinène et dans la plage allant de 0,01 % à 1 % en poids d'au moins un agent de réticulation multioléfine.

4. Composé de caoutchouc durcissable au peroxyde selon la revendication 3, dans lequel le mélange de monomères comprend dans la plage allant de 83 % à 94 % en poids d'au moins un monomère d'isooléfine et dans la plage allant de 5,0 % à 17 % en poids d'un monomère de multioléfine ou de β-pinène et dans la plage allant de 0,01 % à 1 % en poids d'au moins un agent de réticulation multioléfine.

5. Composé de caoutchouc durcissable au peroxyde selon la revendication 3, dans lequel le mélange de monomères comprend dans la plage allant de 85 % à 93 % en poids d'au moins un monomère d'isooléfine et dans la plage allant de 6,0 % à 15 % en poids d'au moins un monomère de multioléfine, y compris le β-pinène, et dans la plage allant de 0,01 % à 1 % en poids d'au moins un agent de réticulation multioléfine.

6. Composé de caoutchouc durcissable au peroxyde selon la revendication 1, dans lequel l'isooléfine est choisie dans le groupe constitué par l'isobutène, le 2-méthyl-1-butène, le 3-méthyl-1-butène, le 2-méthyl-2-butène, le 4-méthyl-1-pentène et leurs mélanges.

7. Composé de caoutchouc durcissable au peroxyde selon la revendication 1, dans lequel la multioléfine est choisie dans le groupe constitué par l'isoprène, le butadiène, le 2-méthylbutadiène, le 2,4-diméthylbutadiène, la pipéryline, le 3-méthyl-1,3-pentadiène, le 2,4-hexadiène, le 2-néopentylbutadiène, le 2-méthyl-1,5-hexadiène, le 2,5-diméthyl-2,4-hexadiène, le 2-méthyl-1,4-pentadiène, le 2-méthyl-1,6-heptadiène, le cyclopentadiène, le méthylcyclopentadiène, le cyclohexadiène, le 1-vinyl-cyclohexadiène et leurs mélanges.

8. Composé de caoutchouc durcissable au peroxyde selon la revendication 1, dans lequel l'agent de réticulation est choisi dans le groupe constitué par le norbornadiène, le 2-isopropénylnorbornène, le 2-vinyl-norbornène, le 1,3,5-hexatriène, le 2-phényl-1,3-butadiène, le divinylbenzène, le diisopropényl-benzène, le divinyltoluène, le divinylxylène et leurs dérivés à substitution alkyle en C₁ à C₂₀.

9. Composé de caoutchouc durcissable au peroxyde selon la revendication 1, dans lequel le polymère de butyle à teneur élevée en multioléfine est halogéné avec du brome ou du chlorure.

10. Composé de caoutchouc durcissable au peroxyde selon la revendication 1, dans lequel le nucléophile est choisi dans le groupe constitué par la triméthylamine, la triéthylamine, la triisopropylamine, la tri-n-butylamine, la triméthylphosphine, la triéthylphosphine, la triisopropylphosphine, la tri-n-butylphosphine, la triphénylphosphine et leurs mélanges.

11. Composé de caoutchouc durcissable au peroxyde selon la revendication 1, dans lequel l'ionomère de butyle à teneur élevée en multioléfine comprend d'environ 2 à 10 % en moles de multioléfine.

12. Composé de caoutchouc durcissable au peroxyde selon la revendication 1, dans lequel l'ionomère de butyle à teneur élevée en multioléfine comprend d'environ 4 à 7,5 % en moles de multioléfine.

13. Composé de caoutchouc durcissable au peroxyde selon la revendication 1, dans lequel le peroxyde est choisi dans le groupe constitué par les peroxydes de dialkyle, les peroxydes de cétal, les peroxydes d'aralkyle, les éthers de peroxydes et les esters de peroxydes.

14. Composé de caoutchouc durcissable au peroxyde selon la revendication 13, dans lequel l'ester de peroxyde est choisi dans le groupe constitué par le peroxyde de di-tert.-butyle, le bis-(tert.-butylperoxyisopropyl)-benzène, le peroxyde de dicumyle, le 2,5-diméthyl-2,5-di(tert.-butylperoxy)-hexane, le 2,5-diméthyl-2,5-di(tert.-butylperoxy)-hexène-(3), le 1,1-bis-(tert.-butylperoxy)-3,3,5-triméthyl-cyclohexane, le peroxyde de benzoyle, le peroxyde de tert.-butylcumyle et le perbenzoate de tert.-butyle.

15. Composé de caoutchouc durcissable au peroxyde selon la revendication 1, comprenant également au moins une charge.

16. Article façonné comprenant un composé selon la revendication 1.

17. Article selon la revendication 15, sous la forme d'un dispositif médical ou d'un couvercle de condensateur.
